# EUROPEAN PATENT APPLICATION

(11) **EP 3 079 233 A1**
(43) Date of publication of application: **12.10.2016**
(21) Application number: 13898795.3
(22) Date of filing: 03.12.2013
(51) Int. Cl.: H02K 3/04, H02K 3/50

(54) **ELECTRIC POWER COLLECTION/DISTRIBUTION RING AND ELECTRIC MOTOR**

(71) Applicant: Hitachi Metals, Ltd., Tokyo 1088224 (JP)
(72) Inventor: EGAMI, Kenichi, Tokyo 1088224 (JP)
(74) Representative: Betten & Resch
(86) International application number: PCT/JP2013/082447
(87) International publication number: WO 2015/083230

(57) **Abstract**

[Problem] Provided is an electric power collection/distribution ring in which a coil and a connection terminal to which the coil is connected can be easily connected to each other, even while contributing to size reduction, and also provided is an electric motor. An electric power collection/distribution ring **(11)** comprises: first to fourth bus rings (**31** to **34**) disposed about a rotational axis line (O) in a concentric manner; and connection terminals (**51** to **54**) for connecting the coil **(210)** of each phase of a stator **(21)** and each of the first to fourth bus rings (**31** to **34**). In the electric power collection/distribution ring **(11),** the first to fourth bus rings (**31** to **34**) are disposed such that: the first bus ring **(31)** and the fourth bus ring **(34)** are disposed side by side in a rotational axis line (O) direction and the second bus ring **(32)** and the third bus ring **(33)** are disposed side by side in the rotational axis line (O) direction; and the first bus ring **(31)** and the second bus ring **(32)** are disposed side by side in a direction orthogonal to the rotational axis line (O) and the third bus ring **(33)** and the fourth bus ring **(34)** are disposed side by side in the direction orthogonal to the rotational axis line (O).The connection terminals **(51, 54)** of the first and fourth bus rings **(31, 34)** have extending portions **(513, 543)** extending across the second and third bus rings **(32, 33)** in the direction orthogonal to the rotational axis line (O).

## Description

### [Technical Field]

This invention relates to an electric power collection/distribution ring to perform electrical collection and distribution for windings coiled around an iron core of a stator, and an electric motor with the electric power collection/distribution ring.

### [Background Art]

Conventionally, an electric power collection/distribution ring for an electric motor, which comprises a plurality of conductive members to be connected respectively with windings coiled around an iron core of a stator, has been known (See, e.g., PTL**1**).

The electric power collection/distribution ring described in PTL**1** includes a connection terminal comprising first, second, third and fourth conductive members and an annular holding member (connection substrate) holding these conductive members. The first, second, third and fourth conductive members are fitted in holding grooves formed at a holding member such that the first to fourth conductive members are aligned in two lines in an axial direction and in two lines in a radial direction, respectively. The first and second conductive members are disposed inwardly in the radial direction than the third and fourth conductive members.

In the first to fourth conductive members, a plurality of connection portions (bent portions) to be connected to ends of the winding for each phase of the stator are formed by bending the conductive member such that the connection portion protrudes from the holding groove in the axial direction. The ends of a winding drawn inwardly in the radial direction of the holding member are connected to the connection portions of the first and second conductive members, and the ends of a winding drawn outwardly in the radial direction of the holding member are connected to the connection portions of the third and fourth conductive members. Respective connection portions of the first to the fourth conductive members and the ends of respective windings are joined with each other e.g. by welding.

### [Prior Art Document]

### [Patent Literature]

PTL**1**: WO2009/025144

### [Summary of the Invention]

### [Problems to be solved by the Invention]

In the electric power collection/distribution ring described in the PTL**1**, the winding to be connected to the connection portions of the first and second conductive members is drawn inwardly in the radial direction of the holding member, and the winding to be connected to the connection portions of the third and fourth conductive members is drawn outwardly in the radial direction of the holding member. However, depending on a configuration of the motor, each winding might not be drawn in such a manner, and in that case, for example, it is necessary to route the ends of the winding outside the stator along the radial direction of the stator. As a result, wiring work might become complicated.

It is therefore an object of the invention to provide an electric power collection/distribution ring and an electric motor using the same, which achieves easier connection between a winding and a connection terminal to be connected to the winding as well as contribution to downsizing.

### [Means for solving the Problems]

To achieve the object as described above, an embodiment of the invention provides an electric power collection/distribution ring, to be arranged in parallel with a stator in a direction of a rotational axis line of a rotor of a three-phase alternating current electric motor, comprising:
first to fourth bus rings, arranged concentrically about the rotational axis line, each of the first to fourth bus rings and the neural-phase bus ring being connected to a winding for each phase in the stator; and
connection terminals for connecting the winding of each phase of a stator and each of the first to fourth bus rings,
wherein the first to fourth bus rings are arranged such that the first bus ring and the fourth bus ring are arranged side by side in the direction of the rotational axis line and the second bus ring and the third bus ring are arranged side by side in the direction of the rotational axis line and the first bus ring and the second bus ring are arranged side by side in a direction orthogonal to the rotational axis line and the third bus ring and the fourth bus ring are arranged side by side in the direction orthogonal to the rotational axis line,
wherein the connection terminals of the first and fourth bus rings have extending portions extending across the second and third bus rings in the direction orthogonal to the rotational axis line.

Further, to achieve the object as described above, another embodiment of the invention provides an electric motor comprising:
a stator;
a rotor rotatable with respect to stator; and
an electric power collection/distribution ring arranged in parallel with the stator in a direction of a rotational axis line of the rotor,
wherein the electric power collection/distribution ring comprises:
first to fourth bus rings, arranged concentrically about the rotational axis line, each of the first to fourth bus rings and the neural-phase bus ring being connected to a winding for each phase in the stator; and
connection terminals for connecting the winding of each phase of a stator and each of the first to fourth bus rings,
wherein the first to fourth bus rings are arranged such that the first bus ring and the fourth bus ring are arranged side by side in the direction of the rotational axis line and the second bus ring and the third bus ring are arranged side by side in the direction of the rotational axis line and the first bus ring and the second bus ring are arranged side by side in a direction orthogonal to the rotational axis line and the third bus ring and the fourth bus ring are arranged side by side in the direction orthogonal to the rotational axis line,
wherein the connection terminals of the first and fourth bus rings have extending portions extending across the second and third bus rings in the direction orthogonal to the rotational axis line.

### [Advantageous Effects of Invention]

According to the electric power collection/distribution ring and the electric motor of the present invention, it is possible to achieve easier connection between a winding and a connection terminal to be connected to the winding as well as contribution to downsizing.

### [Brief Description of Drawings]

**[****FIG.1] FIG.1** is a perspective view showing a configuration example of an electric motor in an embodiment.
**[****FIG.2] FIG.2** is a sectional view of the electric power collection/distribution ring taken along A-A line in **FIG.1****.**
**[****FIG.4] FIG.4** is a schematic diagram showing a positional relationship between connection portions of first to fourth bus rings with respect to ring portions.
**[****FIG.5**A] **FIG.5**A is a perspective view showing a configuration example of a holding member.

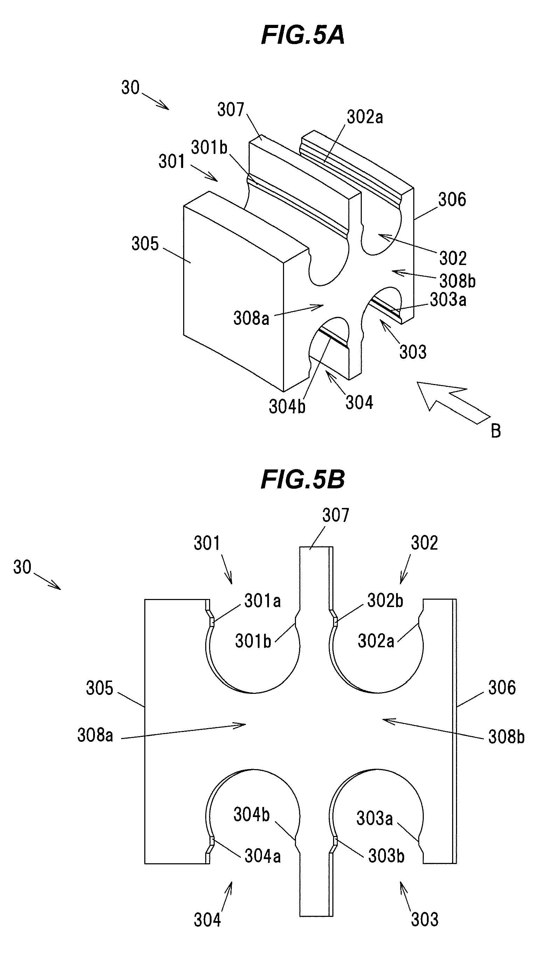

**[****FIG.5**B] **FIG.5**B is a side view the holding member viewed from a direction indicated by an arrow B.

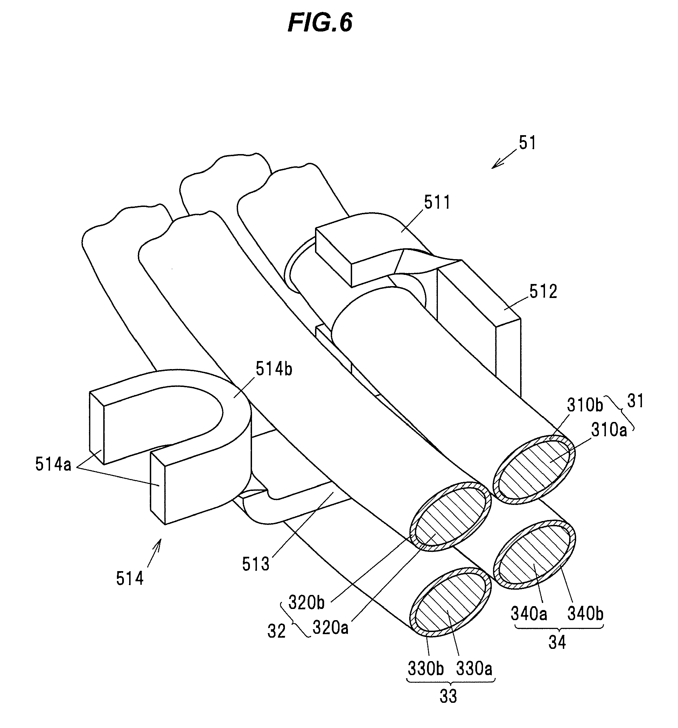

**[****FIG.6] FIG.6** is a perspective view showing a first connection terminal and its peripheral part.

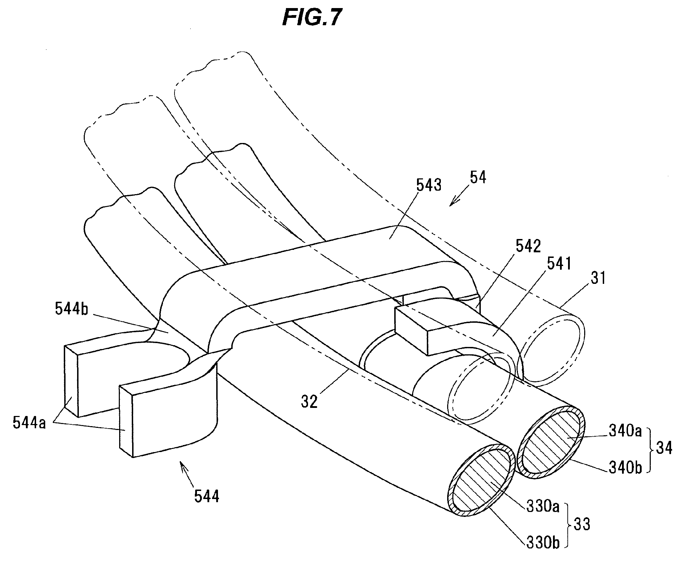

**[****FIG.7] FIG.7** is a perspective view showing a fourth connection terminal and its peripheral part.

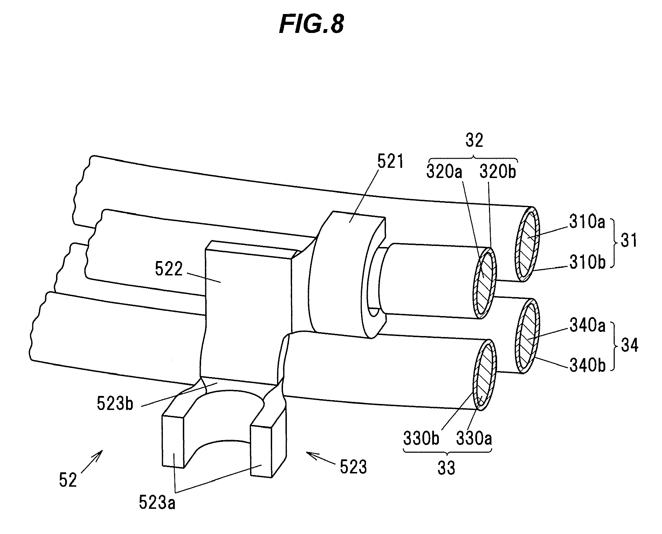

**[****FIG.8] FIG.8** is a perspective view showing a second connection terminal and its peripheral part.

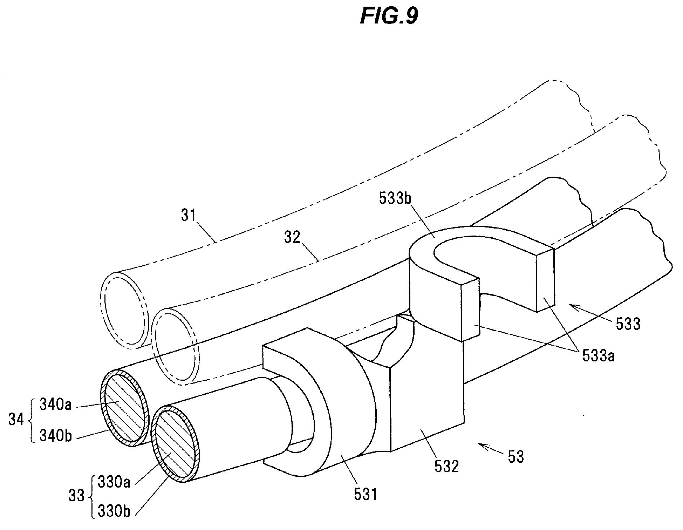

**[****FIG.9] FIG.9** is a perspective view showing a third connection terminal and its peripheral part.

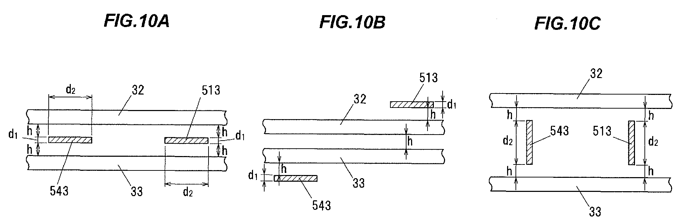

[**FIG.10**A] **FIG.10**A is a schematic diagram showing a positional relationship between extended portions of the first and fourth connection terminals and the second and third bus rings in an axial direction.
[**FIG.10**B] **FIG.10**B is an explanatory diagram showing a comparative example **1** as compared with **FIG.10A****.**

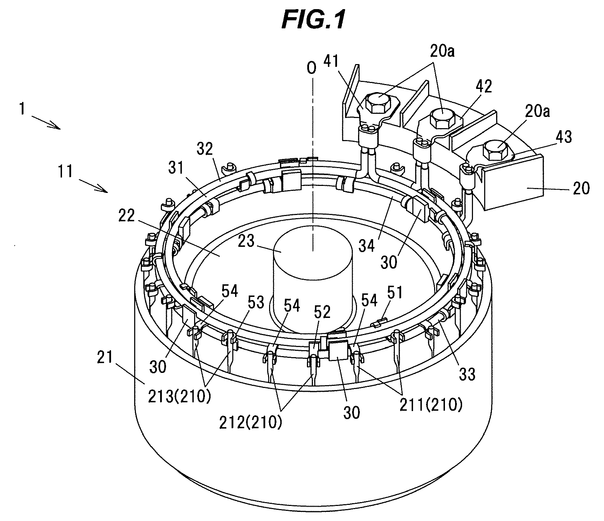

[**FIG.1**C] **FIG.10**C is an explanatory diagram showing a comparative example **2** as compared with **FIG.10**A.

### [Description of Embodiment]

### [Embodiment]

A three-phase alternating current electric motor in the embodiment according to the present invention is used as, for example, a vehicle driving source for running and is supported by a vehicle body.

### (Configuration of electric motor 1)

**FIG.1** is a perspective view showing a configuration example of an electric motor **1** in the embodiment according to the present invention. Besides, a rotational axis line O of a rotor **22** and an output shaft **23** is shown in **FIG.1** by chain line.

The electric motor **1** comprises a cylindrical stator **21,** the rotor **22** rotatable with respect to the stator **21** which is arranged at an inner side than the stator **21** in a radial direction of the stator **21,** the output shaft **23** penetrating a central portion of the rotor **22,** which is integrated with the rotor **22** and rotatably supported, and an electric power collection/distribution ring **11** arranged in parallel with the stator **21** in a direction of the rotational axis line O of the rotor **22.** The stator **21,** the rotor **22,** and the output shaft **23** are arranged concentrically about the rotational axis line O, and the output shaft **23,** the rotor **22** and the stator **21** are arranged in this order from an innermost side to an outermost side.

The electric power collection/distribution ring **11** is arranged concentrically about the rotational axis line O, and comprising first to fourth bus rings **31** to **34,** first, second and third power supply terminals **41** to **43** which are connected to the first to fourth bus rings **31** to **34** respectively, and connected to a terminal base **20** formed at an outer side than the first to fourth bus rings **31** to **34** in a direction orthogonal to the rotational axis line O by a bolt **20**a, a plurality of first to fourth connection terminals **51** to **54** for connecting between respective phase windings **210** (U-phase winding **211,** V-phase winding **212,** W-phase winding **213**) of the stator **21** and the first to fourth bus rings **31** to **34,** and a plurality of (in the present embodiment, six) holding members **30** which hold the first to fourth bus rings **31** to **34.**

The terminal base **20** is connected to a wire harness (not shown) of which one end is connected to an inverter, and the other end of the wire harness are electrically connected to the first, second and third power supply terminals **41** to **43** via the terminal base **20.** Electric current output from the inverter is fed to the electric motor **1** through the wire harness and the first, second and third power supply terminals **41** to **43.** The terminal base **20** is fixed on a fixed section in a body of a vehicle (not shown). In the present embodiment, the first to fourth bus rings **31** to **34** are arranged closer to the stator **21** than the terminal base **20** in the direction of the rotational axis line O.

The plurality of (in the present embodiment, four) first connection terminals **51** are provided at the first bus ring **31,** the plurality of (in the present embodiment, four) second connection terminals **52** are provided at the second bus ring **32,** the plurality of (in the present embodiment, four) third connection terminals **53** are provided on the third bus ring **33,** and the plurality of (in the present embodiment, twelve) fourth connection terminals **54** are provided at the fourth bus ring **34** respectively.

Also, the plurality of first connection terminals **51** are connected to one end of the U-phase winding **211,** the plurality of second connection terminals **52** are connected to one end of the V-phase winding **212,** and the plurality of third connection terminals **53** are connected to one end of the W-phase winding **213** respectively by e.g. fusing.

Meanwhile, the plurality of fourth connection terminals **54** are connected to the other ends of the U-phase winding **211,** the V-phase winding **212,** and the W-phase winding **213** respectively. Hereby, a circuit of current flow through the U-phase winding **211,** the V-phase winding **212,** and the W-phase winding **213** is closed by the fourth bus ring **34** (closed circuit). In other words, the fourth bus ring **34** is a neutral-phase bus ring for forming the closed circuit in the U-phase winding **211,** V-phase winding **212,** and W-phase winding **213.**

### (Configuration of electric power collection/distribution ring 11)

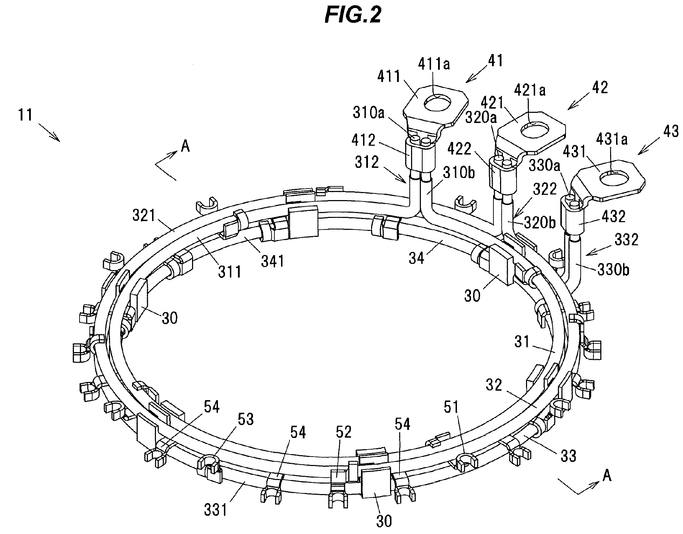

Next, a configuration of an electric power collection/distribution ring **11** will be described later with referring to **FIGS.2** to **4****.**

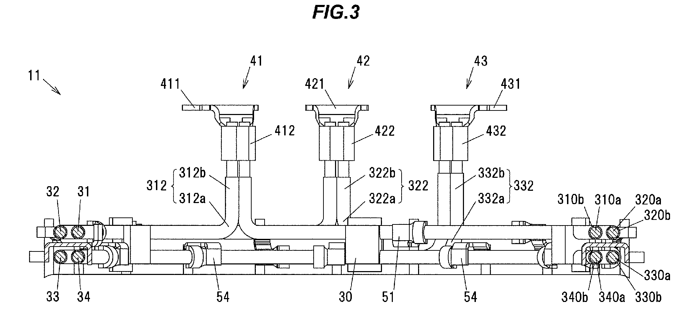

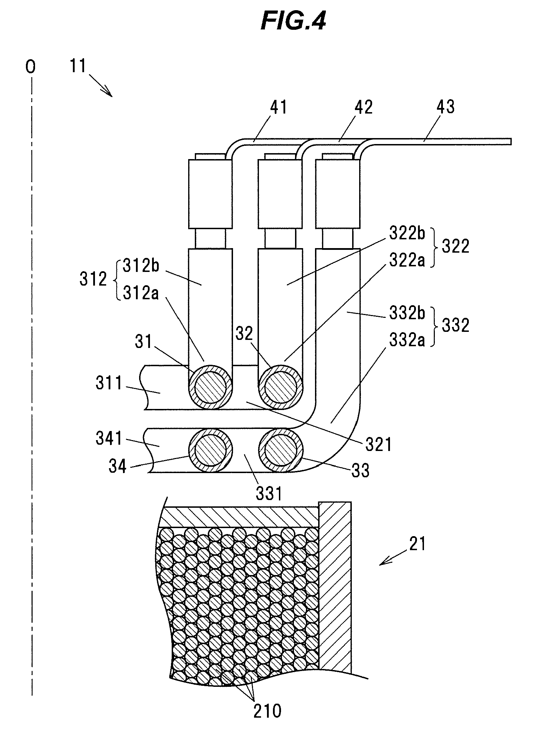

**FIG.2** is a perspective view showing a configuration example of the electric power collection/distribution ring **11** in the embodiment according to the present invention. **FIG.3** is a sectional view of the electric power collection/distribution ring **11** taken along A-A line in **FIG.2****.** **FIG.4** is a schematic diagram showing a positional relationship between connection portions **312, 322, 332** of first to fourth bus rings **31** to **33** with respect to ring portions **311, 321, 331.** Besides, the rotational axis line O is shown in **FIG.4** by chain line.

The first to third bus rings **31** to **33** are configured by bending insulated electric wires respectively comprising core conductors **310**a, **320**a, **330**a, insulators **310**b, **320**b, **330**b covering the core conductors **310**a, **320**a, **330**a, and comprising ling portions **311, 321, 331** which are formed annularly about the rotational axis line O, and connection terminals **312, 322, 332** to connect between the ring portions **311, 321, 331** and the first, second and third power supply terminals **41** to **43.**

The fourth bus ring **34** is configured by bending an insulated electric wire comprising a core conductor **340**a and an insulator **340**b, and formed annularly about the rotational axis line O without any connection portion to connect with the first, second, and third power supply terminals **41** to **43.**

Since the fourth bus ring **34** is, as described above, the neutral-phase bus ring to provide the closed circuit in the U-phase winding **211,** V-phase winding **212,** and W-phase winding **213,** the connection terminal is not connected to any end of the fourth bus ring **34,** unlike configurations of the first to third bus rings **31** to **33.** Therefore, the fourth bus ring **34** is consisting of a ring portion **341.**

Note that the term "ring" refers to a shape extending substantially along by around circumferential direction of the stator **21.** For example, even though a part of the bus ring includes a protruding portion in the radial direction, i.e., the bus ring may be formed in a polygonal shape or a plurality of circular-arc shaped conductive members may be combined to provide a single bus ring, if whole of the bus ring extends substantially along by around a circumferential direction of the stator **21,** such a shape is included in "ring".

The first to fourth bus rings **31** to **34** are arranged such that the first bus ring **31** and the fourth bus ring **34** are arranged in parallel (juxtaposed) in the direction of the rotational axis line O, and that the second bus ring **32** and the third bus ring **33** are arranged in parallel in the direction of the rotational axis line O. Moreover the first bus ring **31** and the second bus ring **32** are arranged in parallel in the direction orthogonal to the rotational axis line O, and the third bus ring **33** and the fourth bus ring **34** are arranged in parallel in the direction orthogonal to the rotational axis line O.

In the present embodiment, the fourth bus ring **34** is arranged between the first bus ring **31** and the stator **21** (cf. **FIG.4**) in the direction of the rotational axis line O, and the third bus ring **33** is arranged between the second bus ring **32** and the stator **21** in the direction of the rotational axis line O. In other words, the third bus ring **33** and the fourth bus ring **34** are arranged closer to the stator **21** than the first bus ring **31** and the second bus ring **32** in the direction of the rotational axis line O. The first bus ring **31** and the fourth bus ring **34** are arranged closer to the rotational axis line O than the second bus ring **32** and the third bus ring **33.**

Furthermore, the first to fourth bus rings **31** to **34** are arranged such that the first bus ring **31** overlaps at least partially the fourth bus ring **34** in a view from the direction of the rotational axis line O, and the second bus ring **32** overlaps at least partially the third bus ring **33** in the view from the direction of the rotational axis line O, the first bus ring **31** overlaps at least partially the second bus ring **32** in a view from the direction orthogonal to the rotational axis line O, and the third bus ring **33** overlaps at least partially the fourth bus ring **34** in the view from the direction orthogonal to the rotational axis line O.

In the direction orthogonal to the rotational axis line O, a distance between the first bus ring **31** and the second bus ring **32,** and a distance between the third bus ring **33** and the fourth bus ring **34** are respectively set to be shorter than diameters of the insulated electric wires constituting the first to fourth bus rings **31** to **34** respectively.

Also, a distance between the first bus ring **31** and the neutral-phase ring **34** and a distance between the second bus ring **32** and the third bus ring **33** are respectively arranged to be spaced apart so as not to interfere with each other due to e.g. vibration of a vehicle.

A ring portion **311** in the first bus ring **31** is connected to the plurality of first connection terminals **51,** a ring portion **321** in the second bus ring **32** is connected to the plurality of second connection terminals **52,** a ring portion **331** in the third bus ring **33** is connected to the plurality of third connection terminals **53,** and a ring portion **341** in the fourth bus ring **34** is connected to the plurality of fourth connection terminals **54,** at even intervals in the circumferential direction respectively.

In the present embodiment, when viewed from the terminal base **20** (cf. **FIG.1**) along the direction of the rotational axis line O, the first to fourth connection terminals **51** to **54** and the fourth connection terminal **54** are arranged such that the first connection terminal **51,** the fourth connection terminal **54,** the second connection terminal **52,** the fourth connection terminal **54,** the third connection terminal **53,** the fourth connection terminal **54,** the first connection terminal **51,** ...in a clockwise direction along with a circumferential direction of the first to fourth bus rings **31** to **34.**

The first connection portion **312** of the first bus ring **31** and the second connection portion **322** of the second bus ring **32** comprise base end sections **312**a, **322**a and extending portions **312**b, **322**b extended from the base end sections **312**a, **322**a for the terminal base **20** in the direction of the rotational axis line O, integrally. The base end sections **312**a, **322**a are bent in a circular-arc shape respectively in the space between both ends of the ring portions **311, 312** and the extending portions **312**b, **322**b.

A connection portion **332** of the third bus ring **33** comprises a base end section **332**a and an extending portion **332**b integrally likewise the first and second bus rings **31, 32.** However a shape of the base end section **332**a is different from the base end sections **312**a, **322**a of the first and second bus rings **31, 32.** The shape of the base end section **332a** of the third bus ring **33** will be described later.

The first to third power supply terminals **41** to **43** comprise connecting chips **411, 421, 431** each having a planar shape, and swaging sections **412, 422, 432** integrally which swage the core conductors **310**a, **320**a, **330**a exposed from the insulators **310**b, **320**b, **330**b in tips of the extending portions **312**b, **322**b, **332**b of the first, second and third bus rings **31, 32, 33.**

The connecting chips **411, 421, 431** are formed by partially bending ends of the swaging section **412, 422, 433** so as to project outwardly in the radial direction of the first to fourth bus rings **31** to **34.** The connecting chips **411, 421, 431** are pierced through through-holes **411**a, **421**a**, 431**a in the direction parallel with the direction of the rotational axis line O to accommodate the bolt **20**a (cf. **FIG.1****)** to connect between the first to third power supply terminal **41** to **43** and the terminal base **20.**

Base end sections **312**a, **322**a of the connection terminals **312, 322** are is configured to extend from both ends of the ring portions **311, 321** toward an opposite side of the stator **21** in a direction in parallel with the rotational axis line O respectively with describing a circular-arc. In addition, extending portions **312**b, **322**b are configured to further extend from an end of the end of the bases **312**a, **322**b toward the opposite side of the stator **21** in the direction parallel with the rotational axis line O.

In other words, the connection terminals **312, 322** of the first and second bus rings **31, 32** are configured such that the base end sections **312**a, **322**a and the extending portion **312**b, **322**b are extending in the direction parallel with the rotational axis line O.

Otherwise, in the third bus ring **33,** a base end section **332**a of the base **332** is configured to extend outwardly in the radial direction of the third bus ring **33** from both ends of the ring portion **331,** and toward an opposite side of the stator **21** in the direction parallel with the rotational axis line O. Then, an extending portion **332**b is configured to further extend toward the opposite side of the stator **21** in the direction parallel with the rotational axis line O from an end of the end of the base **332**a. Therefore, the connection portion **332** is located at an outer side than the ring portion **331** in the radial direction in a view from the rotational axis line O.

### (The configuration of the holding member 30)

Next, the configuration of the holding member **30** will be explained below with referring to **FIGS. 5**A and **5**B.

**FIG.5**A is a perspective view showing a configuration example of a holding member **30.** **FIG.5**B is a side view of the holding member **30** in **FIG.5**A viewed from an arrow B.

The holding member **30** is made from an insulating member, e.g., resin etc., and comprises an inner wall section **305** arranged at an inner side than the first to fourth bus rings **31** to **34** in the radial direction, an outer wall section **306** arranged at an outer side than the first to fourth bus rings **31** to **34** in the radial direction, a central wall section **307** interposed between the inner wall section **305** and the outer wall section **306** as one piece. The inner wall section **305,** the outer wall section **306,** and the central wall section **307** are shaped in a gradual arc along a shape of the first to fourth bus rings **31** to **34.**

A first holding groove **301** to hold the first bus ring **31** and a fourth holding groove **304** to hold the fourth bus ring **34** are formed between the inner wall section **305** and the central wall section **307,** and a second holding groove **302** to hold the second bus ring **32** and a third holding groove **303** to hold the third bus ring **33** are formed between the outer wall section **306** and the central wall section **307.**

The holding member **30** comprises a partition section **308**a to separate between the first holding groove **301** and the fourth holding groove **304** in a portion between the inner wall section **305** and the central section **307,** and a partition section **308b** to separate between the second holding groove **302** and the third holding groove **303** in a portion between the outer wall section **306** and the central section **307.**

A pair of salient portions **301**a, **301**b are formed on an inner surface of the first holding groove **301** to prevent the first bus ring **31** from being left out from the first holding groove **301.** Likewise, a pair of salient portions **302**a **302**b are formed on an inner surface of the second holing groove **302,** a pair of salient portions **303**a **303**b are formed on an inner surface of the third holing groove **303,** and a pair of salient portions **304**a **304**b are formed on an inner surface of the fourth holing groove **304.**

As shown in **FIG. 5B**, one salient portion **301**a of the pair of salient portions **301**a, **301**b on the first holding groove **301** and one salient portion **304**a of the pair of salient portions **304**a**, 304**b on the fourth holding groove **304** are formed on the side of the inner wall section **305,** while the other salient portion **301**b in the first holding groove **301** and the other salient portion **304**b in the fourth holding groove **304** are formed respectively on the side of the central wall section **307.**

One salient portion **302**a of the pair of salient portions **302**a, **302**b on the second holding groove **302** and one salient portion **303**a on the third holding groove **303** are formed on the side of the outer wall section **306**, while the other salient portion **302**b on the second holding groove **302** and the other salient portion **303**b on the third holding groove **303** are formed on the side of the central wall section **307.**

### (Configuration of first to fourth connection terminals 51 to 54)

Next, the configuration of the first to fourth connection terminals **51** to **54** will be described below with referring to **FIGS. 6** to **9****.**

**FIG.6** is a perspective view of a first connection terminal **51** and its peripheral part. **FIG.7** is a perspective view of a fourth connection terminal **54** and its peripheral part. **FIG.8** is a perspective view of a second connection terminal **52** and its peripheral part. **FIG.9** is a perspective view of a third connection terminal **53** and its peripheral part. Besides, the first and second bus rings **31, 32** are shown by the two-dot chain line in **FIG.7** and **FIG.9****.**

The first connection terminal **51** integrally comprises, as shown in **FIG.6****,** a swaging section **511** swaged at a portion where the core conductor **310**a of the first bus ring **31** is exposed, a base **512** arranged on a side of one end in a circumferential direction of the first bus ring **31** in the swaging section **511,** an extending portion **513** extending in a radial direction of the first to fourth bus rings **31** to **33** and the fourth bus ring **34** from a side of one end of the base **512,** and a winding connection portion **514** which is formed at an opposite side of the other end of the base **512** in the extending portion **513,** connected to one end of the U-phase winding **211** (cf. **FIG.1**).

The swaging section **511** swages the first bus ring **31** toward the direction of the rotational axis line O from an inside of the radial direction of the first bus ring **31.** The base **512** is formed in a rectangular shape in which long sides are formed in the direction of the rotational axis line O and short sides are formed in the circumferential direction of the first to fourth bus rings **31** to **34.**

The extending portion **513** extends from an end of a side of the stator **21** in a direction of the long sides of the base **512** outwardly in the radial direction of the second bus ring **32.** Namely, the extending portion **513** of the first connection terminal **51** connected to the first bus ring **31** is extending across an adjacent bus ring (the second bus ring **32**) in the radial direction between the swaging section **511** and the winding connection portion **514.**

Also, both ends of the extending portion **513** (an end on the side of the base **512** and an end on the side of the winding connection portion **514**) in an extending direction are bent toward an opposite side of the stator **21** in the direction of the rotational axis line O (on a side of the terminal base **20**). Accordingly, the extending portion **513** is located closer to the stator **21** than the swaging section **511** and the winding connection portion **514.**

In the present embodiment, the extending portion **513** is extending across in the direction orthogonal to the rotational axis line O between the first bus ring **31** and the fourth bus ring **34,** as well as between the second bus ring **32** and the third bus ring **33** without contacting circumferential surfaces of the first to third bus rings **31** to **33** and the neutral-phase bus ring **34.** Besides, it is enough for the extending portion **513** to intervene at least in a space between the second bus ring **32** and the third bus ring **33.**

The winding connection portion **514** comprises a pair of straight portions **514**a extending toward the radial direction of the first to fourth bus rings **31** to **34,** and a circular-arc portion **514**b having a circular-arc shape and linking the pair of straight portions **514**a as one piece. In the present embodiment, the circular-arc portion **514**b is located on a side of the swaging section **511** in the radial direction of the first to fourth bus rings **31** to **34.** Accordingly, the winding connection portion **514** is configured to open outwardly in the radial direction of the second bus ring **32** and third bus rings **33.**

The fourth connection terminal **54** comprises, as shown in **FIG.7****,** a swaging section **541** swaged at a portion where the core conductor **340**a of the fourth bus ring **34** are exposed, a base **542** arranged on a side of one end in the circumferential direction of the swaging section **541** of the fourth bus ring **34,** an extending portion **543** extended over the second bus ring **32** and the third bus ring **33** in the direction orthogonal to the rotational axis line O from a side of one end of the base **542,** and a winding connection portion **544** which is provided at an opposite side of the base **542** in the extending portion **543,** connected to each of the other ends of the U-phase winding **211,** V-phase winding **212,** and W-phase winding **213** (cf. **FIG.1****)** as one piece.

The swaging section **541** swages the fourth bus ring **34** in the direction of the rotational axis line O from an inside of the axial direction of the fourth bus ring **34.** The base **542** is formed in a rectangular shape in which long sides are formed in the direction of the rotational axis line O and short sides are formed in the circumferential direction of the first to fourth bus rings **31** to **34.**

The extending portion **543** extends from an end on an opposite side of the stator **21** in a direction of the long side of the base **542** outwardly in the radial direction of the third bus ring **33.** In other words, the extending portion **543** of the fourth connection terminal **54** which is connected to the fourth bus ring **34** is extended over an adjacent bus ring (the third bus ring **33**) in the radial direction between the swaging section **541** and the winding connection portion **544.**

Moreover, both ends in an extending direction of the extending portion **543** (the end on the side of the base **542** and the end on the side of the winding connection portion **544**) are bent toward a side of the stator **21** in the direction of the rotational axis line O. Accordingly, the swaging section **541** and the winding connection portion **544** are located closer to the stator **21** than the extending portion **543** in the direction of the rotational axis line O.

In the present embodiment, the extending portion **543,** likewise the extending portion **513** of the first connection terminal **51,** is extending across in the direction orthogonal to the rotational axis line O between the first bus ring **31** and the fourth bus ring **34,** and between the second bus ring **32** and the third bus ring **33,** without contacting the circumferential surfaces of the first to third bus rings **31** to **33** and the neutral-phase bus ring **34.** Besides, likewise the first connection terminal **51,** it is enough for the extending portion **543** of the fourth connection terminal **54** to intervene at least in a space between the second bus ring **32** and the third bus ring **33.**

The winding connection portion **544** integrally comprises, likewise the winding connection portion **514** of the first connection terminal **51,** a pair of straight portions **544**a and a circular-arc portion **514**b so as to open outwardly in the radial direction of the second bus ring **32** and the third bus rings **33.**

In the present embodiment, the first connection terminal **51** and the fourth connection terminal **54** have an identical shape, but differ from each other in an orientation of a position. In other words, the first connection terminal **51** and the fourth connection terminal **54** are composed of same shapes in all of the swaging portions **511, 541,** the bases **512, 542,** the extending portions **513, 543,** and the winding connection portions **514,544.**

The first connection terminal **51** is swaged to the first bus ring **31** so as to locate the extending portion **513** at the side of the stator **21** with respect to the swaging section **511** and the winding connection portion **514** in the direction of the rotational axis line O. Otherwise, the fourth connection terminal **54** is swaged to the fourth bus ring **34** so as to locate the extending portion **543** at an opposite side of the stator **21** with respect to the swaging section **511** and the winding connection portion **514** in the direction of the rotational axis line O.

The second connection terminal **52** integrally comprises, as shown in **FIG.8**, a swaging section **521** swaged at a portion where the core conductor **320**a of the second bus ring **32** is exposed, a base **522** which is provided at an a side of one end of the swaging section **521** in the circumferential direction of the second bus ring **32,** and a winding connection portion **523** which is formed at one end on the side of the stator **21** in the direction of the rotational axis line O in the base **522,** connected to one end of the V-phase winding **212** (cf. **FIG.1**).

The swaging section **521** swages the second bus ring **32** toward the direction of the rotational axis line O from an outside of the radial direction of the second bus ring **34.** The base **522** is formed in a rectangular shape in which long sides are formed in the direction of the rotational axis line O and short sides are formed in a circumferential direction of the first to fourth bus rings **31** to **33** and the fourth bus ring **34.**

The winding connection portion **523** integrally comprises, likewise the winding connection portion **514** of the first connection terminal **51** and the winding connection portion **544** of the fourth connection terminal **54,** a pair of straight portions **523**a and a circular-arc portion **523**b so as to open outwardly in the radial direction of the second bus ring **32** and the third bus ring **33.**

The third connection terminal **53** integrally comprises, as shown in **FIG.9****,** a swaging section **531** swaged at a portion where the core conductor **330**a of the third bus ring **33** is exposed, a base **532** which is provided on a side of one end of the swaging section **531** in the circumferential direction of the third bus ring **33,** and a winding connection portion **533** which is formed at one end of an opposite side of the stator **21** in the direction of the rotational axis line O in the base **532,** connected to one end of the W-phase winding **213** (cf. **FIG.1**).

The swaging section **531** swages the third bus ring **33** in the direction of the rotational axis line O from an outside of the radial direction of the third bus ring **33.** The base **53** comprises long sides in the direction of the rotational axis line O and short sides in the circumferential direction of the first to fourth bus rings **31** to **34.**

The winding connection portion **533** integrally comprises, likewise the winding connection portion **523** of the second connection terminal **52,** a pair of straight portions **533**a and a circular-arc portion **533**b so as to open outwardly in the radial direction of the second bus ring **32** and the third bus ring **33.**

In the present embodiment, the second connection terminal **52** and the third connection terminal **53** do not include any extending portion in contrast to the configuration of the first connection terminal **51** and the fourth connection terminal **54.**

Also, in the present embodiment, the second connection terminal **52** and the third connection terminal **53** have an identical shape, but differ from each other in an orientation of a position. That is to say, the second connection terminal **52** and the third connection terminal **53** are composed of same shapes in all of the swaging sections **521, 531,** the bases **522, 532,** and the winding connection portions **523, 533.**

The second connection terminal **52** is swaged to the second bus ring **32** so as to locate the winding connection portion **523** on a side of the stator **21** with respect to the swaging section **521** in the direction of the rotational axis line O. Otherwise, the third connection terminal **53** is swaged to the third-phase bus ring **33** so as to locate the winding connection portion **533** on an opposite side of the stator **21** with respect to the swaging section **531** in the direction of the rotational axis line O.

### (Positional relationship of the extending portions 513, 543 in the axial direction)

Next, a positional relationship of the extending portion **513** of the first connection terminal **51** and the extending portion **543** of the fourth connection terminal **54** in the radial direction will be explained below with referring to **FIG.10**A.

**FIG.10**A is an explanatory diagram for explaining the positional relationship of the extending portion **513** of the first connection terminal **51** and the extending portion **543** of the fourth connection terminal **54** in the radial direction of the second bus ring **32** an the third bus ring **33.**

In a cross section parallel with the rotational axis line O between the second bus ring **32** and the third bus ring **33,** the extending portion **513** of the first connection terminal **51** and the extending portion **543** of the fourth connection terminal **54** are configured such that a dimension d**1** in the direction parallel with the rotational axis line O (an alignment direction of the second bus ring **32** and the third bus ring **33**) is shorter than a dimension d**2** in the direction along the circumferential direction of the first to fourth bus rings **31** to **34** (d**1**<d**2**).

Also, the second bus ring **32** and the extending portions **513, 543** are spaced apart from each other with a distance h so as not to interfere with each other due to e.g. vibration of a vehicle. Likewise, the third bus ring **33** and the extending portions **513, 543** are spaced apart from each other with the distance h so as not to interfere with each other due to e.g. vibration of a vehicle. In the present embodiment, the distance h is around **1** to **5** mm. Therefore, in the electric power collection/distribution ring **11** in the present embodiment, a dimension in the rotational axis line O is a total of an addition of a diameter (outer diameter) of the insulated electric wire for the second bus ring **32** and a diameter (outer diameter) of the insulated electric wire for the third bus ring **33** and a dimension of (**2**h+d**1**).

### (Comparative example)

**FIG.10**B is an explanatory diagram showing a comparative example **1** as compared with **FIG.10**A. **FIG.10**C is an explanatory diagram showing a comparative example **2** as compared with **FIG.10**A.

As shown in **FIG.10**B, in the rotational axis line O, the second bus ring **32** is closer to the stator **21** than the extending portion **513** of the first connection terminal **51,** and the fourth connection terminal **54** is closer to the stator **21** than the third bus ring **33.** In other words, the extending portion **513** of the first connection terminal **51** and the extending portion **543** of the fourth connection terminal **54** are not interposed between the second bus ring **32** and the third bus ring **33.**

The second bus ring **32** and the third bus ring **33,** the second bus ring **32** and the extending portion **513** of the first connection terminal **51,** and the third bus ring **33** and the extending portion **543** of the fourth connection terminal **54** are respectively spaced apart from each other with a distance h so as not to interfere with each other. Therefore, in the electric power collection/distribution ring **11** in the comparative example **1** as shown in **FIG.10**B, a dimension in the rotational axis line O is a total of an addition of a diameter (outer diameter) of the insulated electric wire for the second bus ring **32** and a diameter (outer diameter) of the insulated electric wire for the third bus ring **33** and a dimension of (**3**h+**2**d**1**).

As shown in **FIG.10**C, the extending portion **513** of the first connection terminal **51** and the extending portion **543** of the fourth connection terminal **54** are arranged such that, in a cross section parallel with the rotational axis line O between the second bus ring **32** and the third bus ring **33,** a dimension d**1** in the alignment direction of the second bus ring **32** and the third bus ring **33** is set to be d**2**.

The second bus ring **32** should be spaced apart from the extending portions **513, 543** by a distance h, and the third bus ring **33** should be spaced part from extending portions **513, 543** by a distance h, respectively. Therefore, in the electric power collection/distribution ring **11** in the comparative example **2** as shown in **FIG.10**C, a dimension in the rotational axis line O is a total of an addition of a diameter (outer diameter) of the insulated electric wire for the second bus ring **32** and a diameter (outer diameter) of the insulated electric wire for the third bus ring **33** and a dimension of (**2**h+d**2**).

### (Functions and advantageous effects of the embodiment)

The embodiment as described above has the following functions and advantageous effects.

**(1)** The first connection terminal **51** connected to the first bus ring **31** and the fourth connection terminal **54** connected to the fourth bus ring **34** respectively have the extending portions **513, 543** that are extending across the second bus ring **32** and the third bus ring **33** in the direction orthogonal to the rotational axis line O, so that it is possible to facilitate the connection with the windings **210** drawn outside from the electric power collection/distribution ring **11** in the rotational axis line O.

**(2)** In the first connection terminal **51** and the fourth connection terminal **54,** the extending portions **513, 543** are extending across in the direction orthogonal to the rotational axis line O a space between the second bus ring **32** and the third bus ring **33** that are securely spaced apart from each other with a predetermined distance, so that it is possible to reduce the thickness of the electric power collection/distribution ring **11** in the rotational axis line O as compared to the comparative example **1** as shown in **FIG.10**B.

**(3)** The extending portion **513** of the first connection terminal **51** and the extending portion **543** of the fourth connection terminal **54** are configured such that, in a cross section parallel with the rotational axis line O between the second bus ring **32** and the third bus ring **33,** the dimension d**1** in the direction parallel with the rotational axis line O is shorter than the dimension d**2** in the direction along the circumferential direction of the first to fourth bus rings **31** to **34.** Therefore, it is possible to reduce the thickness of the electric power collection/distribution ring **11** in the rotational axis line O as compared to the comparative example **2** as shown in **FIG.10**C**.**

### (Summary of the embodiment)

Next, technical idea understood from the embodiment as described above will be described below with using the reference numerals, etc., used in the description of the embodiment. However, each reference numeral, etc., described below is not intended to limit the constituent elements in the claims to the members, etc., specifically described in the embodiment.
**[1]** An electric power collection/distribution ring **(11),** to be arranged in parallel with a stator **(21)** in a direction of a rotational axis line O of a rotor **(22)** of a three-phase alternating current electric motor **(1),** comprising:
   first to fourth bus rings (**31** to **34**), arranged concentrically about the rotational axis line O, each of the first to fourth bus rings (**31** to **33**) and the neural-phase bus ring **(34)** being connected to a winding for each phase **(211, 212, 213)** in the stator **(21);** and
   connection terminals (first to fourth connection terminals **51** to **54**) for connecting the winding **(211, 212, 213)** of each phase of a stator **(21)** and each of the first to fourth bus rings (**31** to **34**),
   wherein the first to fourth bus rings (**31** to **34**) are arranged such that the first bus ring **(31)** and the fourth bus ring **(34)** are arranged side by side in the direction of the rotational axis line (O) and the second bus ring **(32)** and the third bus ring **(33)** are arranged side by side in the direction of the rotational axis line (O) and the first bus ring **(31)** and the second bus ring **(32)** are arranged side by side in a direction orthogonal to the rotational axis line (O) and the third bus ring **(33)** and the fourth bus ring **(34)** are arranged side by side in the direction orthogonal to the rotational axis line (O),
   wherein the connection terminals **(51, 54)** of the first and fourth bus rings (**31, 34**) have extending portions **(513, 543)** extending across the second and third bus rings **(32, 33)** in the direction orthogonal to the rotational axis line (O).
**[2]** The electric power collection/distribution ring **(11)** according to **[1],** wherein the first to fourth bus rings (**31** to **34**) are extending across a space between the second bus ring **(32)** and the second bus ring **(33)** in the direction orthogonal to the rotational axis line (O).
**[3]** The electric power collection/distribution ring **(11)** according to **[2],** wherein the extending portions **(513, 543)** are configured such that, in a cross section parallel with the rotational axis line O between the second bus ring **(32)** and the third bus ring **(33),** a dimension in the direction parallel with the rotational axis line O is shorter than a dimension in a direction along a circumferential direction of the first to fourth bus rings (**31** to **34**).
[4] The electric power collection/distribution ring **(11)** according to any one of **[1]** to **[3],** wherein the extending portions **(513, 543)** do not contact circumferential surfaces of the first to fourth bus rings (**31** to **34**).
**[5]** An electric motor **(1)** comprising:
   a stator **(21);**
   a rotor **(22)** rotatable with respect to stator **(21);** and
   an electric power collection/distribution ring **(11)** arranged in parallel with the stator **(21)** in a direction of a rotational axis line O of the rotor **(22),**
   wherein the electric power collection/distribution ring **(11)** comprises:
   first to fourth bus rings (**31** to **34**), arranged concentrically about the rotational axis line O, each of the first to fourth bus rings (**31** to **33**) and the neural-phase bus ring **(34)** being connected to a winding for each phase **(211, 212, 213)** in the stator **(21);** and
   connection terminals (first to fourth connection terminals **51** to **54**) for connecting the winding **(211, 212, 213)** of each phase of a stator **(21)** and each of the first to fourth bus rings (**31** to **34**),
   wherein the first to fourth bus rings (**31** to **34**) are arranged such that the first bus ring **(31)** and the fourth bus ring **(34)** are arranged side by side in the direction of the rotational axis line (O) and the second bus ring **(32)** and the third bus ring **(33)** are arranged side by side in the direction of the rotational axis line (O) and the first bus ring **(31)** and the second bus ring **(32)** are arranged side by side in a direction orthogonal to the rotational axis line (O) and the third bus ring **(33)** and the fourth bus ring **(34)** are arranged side by side in the direction orthogonal to the rotational axis line (O),
   wherein the connection terminals **(51, 54)** of the first and fourth bus rings (**31, 34**) have extending portions **(513, 543)** extending across the second and third bus rings **(32, 33)** in the direction orthogonal to the rotational axis line (O).

Although the embodiments of the invention have been described, the invention is not to be limited to the embodiments. Further, it should be noted that all combinations of the features described in the embodiments are not necessary to solve the problem of the invention.

The various kinds of modifications can be implemented without departing from the gist of the invention. For example, in the embodiment described above, although the winding **210** is drawn to be located at an outer side than the electric power collection/distribution ring **11** in the direction orthogonal to the rotational axis line O, the invention is not to be limited to described above, e.g., it is possible to draw the winding **210** to be located at an inner side than the electric power collection/distribution ring **11** in the direction orthogonal to the rotational axis line O.

Also, in the embodiment as described above, the first to fourth bus rings **31** to **34** are held by the plurality of holding members **30.** The present invention is not limited thereto, and the first to fourth bus rings **31** to **34** may be held by covering with e.g. a mold resin.

Also, in the embodiment as described above, the extending portions **312**b, **322**b, **332**b of the connection terminals **312, 322, 332** of the first to third bus rings **31** to **33** are extended toward the terminal base **20** which is arranged at the opposite side of the stator **21** in the direction of the rotational axis line O. The present invention is not limited to the embodiment as described above, and e.g. the extending portions **312**b, **322**b, **332**b may be extended toward a terminal base which is arranged at the side of the stator **21** in the direction of the rotational axis line O.

Also, in the embodiment as described above, the connecting chips **411, 421, 431** in the first to third power supply terminals **41** to **43** are bent to be extended outwardly in the radial direction of the first to fourth bus rings **31** to **34.** The present invention is not limited to the first embodiment as described above, e.g., the connecting chips **411, 421, 431** may be extended in parallel with the rotational axis line O without bending.

Also, in the embodiment as described above, the first to fourth connection terminals **51** to **54** are formed of separate parts different from the first to fourth bus rings **31** to **34.** The present invention is not limited to the first embodiment as described above, e.g., corresponding parts to the connection terminal may be formed by bending the first to fourth bus rings **31** to **34.**

Also, the mutual positional relationship between the first to fourth bus rings **31** to **34** is not limited to the positional relationship described in the above embodiment.

Also, in the embodiment as described above, the insulated electric wire is used for the first to fourth bus rings **31** to **34.** The present invention is not limited to the first embodiment as described above, e.g., bare wire or bus bar formed by punching a plate etc. may be used for the first to fourth bus rings **31** to **34.**

Also, in the embodiment as described above, the first to fourth bus rings **31** to **34** are formed in a circular shape. The present invention is not limited to the embodiment as described above, and the first to fourth bus rings **31** to **34** may be formed in e.g. elliptical shape or polygonal shape.

Also, in the embodiment as described above, the first to fourth bus rings **31** to **34** are formed by bending one conductive member (the insulated electric wire) in an annular shape. The present invention is not limited to the embodiment as described above, e.g., a plurality of separate conductive members connected with each other to provide an annular shape may be used for the first to fourth bus rings **31** to **34.**

### [List of Reference numerals]

- **1:**: ELECTRIC MOTOR
- **11:**: ELECTRIC POWER COLLECTION/DISTRIBUTION RING
- **21:**: STATOR
- **22:**: ROTOR
- **31** to **34:**: FIRST TO FOURTH BUS RINGS
- **51** to **54:**: CONNECTION TERMINAL
- **210:**: WINDING
- **211:**: U-phase WINDING
- **212:**: V-phase WINDING
- **213:**: W-phase WINDING
- **513, 543:**: EXTENDING PORTIONS
- O:: ROTATIONAL AXIS LINE

## Claims

1. An electric power collection/distribution ring, to be arranged in parallel with a stator in a direction of a rotational axis line of a rotor of a three-phase alternating current electric motor, comprising:
first to fourth bus rings, arranged concentrically about the rotational axis line, each of the first to fourth bus rings and the neural-phase bus ring being connected to a winding for each phase in the stator; and
connection terminals for connecting the winding of each phase of a stator and each of the first to fourth bus rings,
wherein the first to fourth bus rings are arranged such that the first bus ring and the fourth bus ring are arranged side by side in the direction of the rotational axis line and the second bus ring and the third bus ring are arranged side by side in the direction of the rotational axis line and the first bus ring and the second bus ring are arranged side by side in a direction orthogonal to the rotational axis line and the third bus ring and the fourth bus ring are arranged side by side in the direction orthogonal to the rotational axis line,
wherein the connection terminals of the first and fourth bus rings have extending portions extending across the second and third bus rings in the direction orthogonal to the rotational axis line.

2. The electric power collection/distribution ring according to claim 1, wherein the first to fourth bus rings are extending across a space between the second bus ring and the second bus ring in the direction orthogonal to the rotational axis line.

3. The electric power collection/distribution ring according to claim **2,** wherein the extending portions are configured such that, in a cross section parallel with the rotational axis line between the second bus ring and the third bus ring, a dimension in the direction parallel with the rotational axis line is shorter than a dimension in a direction along a circumferential direction of the first to fourth bus rings.

4. The electric power collection/distribution ring according to any one of claims **1** to **3,** wherein the extending portions do not contact circumferential surfaces of the first to fourth bus rings.

5. An electric motor comprising:
a stator;
a rotor rotatable with respect to stator; and
an electric power collection/distribution ring arranged in parallel with the stator in a direction of a rotational axis line of the rotor,
wherein the electric power collection/distribution ring comprises:
first to fourth bus rings, arranged concentrically about the rotational axis line, each of the first to fourth bus rings and the neural-phase bus ring being connected to a winding for each phase in the stator; and
connection terminals for connecting the winding of each phase of a stator and each of the first to fourth bus rings,
wherein the first to fourth bus rings are arranged such that the first bus ring and the fourth bus ring are arranged side by side in the direction of the rotational axis line and the second bus ring and the third bus ring are arranged side by side in the direction of the rotational axis line and the first bus ring and the second bus ring are arranged side by side in a direction orthogonal to the rotational axis line and the third bus ring and the fourth bus ring are arranged side by side in the direction orthogonal to the rotational axis line,
wherein the connection terminals of the first and fourth bus rings have extending portions extending across the second and third bus rings in the direction orthogonal to the rotational axis line.
